# EUROPÄISCHE PATENTSCHRIFT

(11) **EP 2 153 910 B1**
(45) Veröffentlichungstag und Bekanntmachung des Hinweises auf die Patenterteilung: **11.04.2012**
(21) Anmeldenummer: 08013886.0
(22) Anmeldetag: 02.08.2008
(51) Int. Cl.: B05B 13/04, B05B 15/04, B05D 1/32, B60J 11/06

(54) **Verfahren und System zum Lackieren von Werkstücken**
Method and system for painting workpieces
Procédé et système de peinture de pièces

(43) Veröffentlichungstag der Anmeldung: 17.02.2010
(73) Patentinhaber: ABB AG, 68309 Mannheim (DE)
(72) Erfinder: Börner, Gunter, 74889 Sinsheim/Eschelbach (DE)

(56) Entgegenhaltungen:
- WO-A1-2004/085082
- DE-A1- 19 737 065
- DE-A1- 19 945 291
- GB-A- 2 158 368
- JP-A- 9 141 578
- US-A- 2 082 791

## Beschreibung

Die Erfindung betrifft ein Verfahren zum Lackieren von Werkstücken, wobei wenigstens ein erster nicht zu lackierender Bereich eines Werkstückes mit einer Schutzschicht versehen wird, wobei in einem anschließenden Lackiervorgang unter Verwendung eines ersten Lacks wenigstens ein zweiter Bereich des Werkstückes lackiert wird, welcher zumindest teilweise den wenigstens einen ersten Bereich überdeckt. Die Erfindung betrifft weiterhin ein entsprechendes roboterbasiertes System zum Lackieren von Werkstücken.

Es ist allgemein bekannt, dass zum Lackieren von Werkstücken in der Industrie Zerstäubervorrichtungen für Lack verwendet werden, beispielsweise Hochrotationszerstäuber oder auch Luftzerstäuber. Derartige Zerstäuber werden in einem bestimmten Abstand, beispielsweise je nach Zerstäuber 120mm bis 350mm, entlang einer Bahn um das zu lackierende Objekt geführt. In industriellen Anlagen sind derartige Zerstäuber zunehmend durch einen Industrieroboter geführt, durch welchen die Bewegungsbahn und die Bewegungsgeschwindigkeit bestimmt sind. Insbesondere bei der Verwendung von Luftzerstäubern ist aber auch noch eine manuelle Führung durch einen menschlichen Lackierer verbreitet.

Die Zerstäubervorrichtungen weisen in erster Näherung eine punktförmige Lackquelle auf, von der sich ebenfalls in erster Näherung kegelförmig ein Sprühkegel mit zerstäubtem Lack ausbreitet, wobei die Kegelform je nach Zerstäuber durch geeignete Parameter wie Drehzahl, Lenkluft, Zerstäuberluft und/oder Hornluft in weiten Grenzen zu beeinflussen ist.

Bedingt durch den Zerstäubungsvorgang des Lackmaterials, durch welchen wie zuvor erwähnt ein Lacknebel erzeugt wird, ist ein scharfkantiges Lackieren nicht möglich. Die Verteilung von Lackmaterial unter einem linear über einer Ebene bewegten Zerstäuber entspricht in erster Näherung einer Gaußschen Verteilung. Je nach Zerstäuber, dessen Applikationsparametern und dem verwendeten Lack ergeben sich stets Übergangsbereiche zwischen einem deckend lackierten Bereich eines Werkstückes, welcher eine minimale Schichtdicke an jedem Punkt der Oberfläche aufweist, und einem nicht lackierten Bereich eines Werkstückes mit einer mittleren Schichtdicke von genau null. Dieser Übergangsbereich ist durch eine mit Lacktropfen und/oder Lacknebel besprenkelte Oberfläche gekennzeichnet und kann beispielsweise zwischen 5cm und mehr als 40cm Breite aufweisen.

Beim zwei- oder mehrfarbigen Lackieren eines Werkstückes ist zumeist eine sehr scharfkantige Abgrenzung von benachbarten und in unterschiedlichen Farben lackierten Bereichen eines Werkstückes gefordert, beispielsweise weniger als 0,5mm.

Zum Erreichen einer derart scharfkantigen Abgrenzung ist es gemäß dem Stand der Technik üblich, ein zwei- bzw. mehrfarbig zu lackierendes Werkstück zumindest bereichsweise mit einer ersten Farbe zu lackieren. Nach einem Trocknungsvorgang der Farbe wird der lackierte Bereich teilweise mit einer Maskierfolie abgeklebt und in einem weiteren Arbeitsschritt ein angrenzender andersfarbig zu lackierender Bereich in einer weiteren Farbe lackiert. Die Maskierfolie überdeckt hierbei zumindest den Bereich des Werkstückes, auf welchem sich beim Lackieren des andersfarbigen Bereiches eine gesprenkelte, nicht deckende und nicht gewollte Lackschicht ausbilden würde. Nach Beendigung des Lackiervorganges ist die Maskierfolie zu entfernen und es sind zwei scharfkantig aneinandergrenzende Bereiche mit unterschiedlicher Farbe ausgebildet worden.

Aus dem Dokument DE 19737065 A1 ist ein gattungsgemaßes Verfahren zum Aufbringen eines Abdeckstreifens auf eine komplex geformten Oberfläche, insbesondere einem Scheibenflansch einer Automobilkarosserie, bekannt. Dies beinhaltet eine zumindest teilweise Abdeckung des Scheibenflansches mittels einer pastösen Masse, welche nach dem Auftragen erhärtet. Im Anschluss an eine nachfolgende Lackierung der Automobilkarosserie wird der Abdeckstreifen rückstandsfrei abgezogen und ein zumindest teilweiser nicht lackierter Scheibenflansch freigelegt. Dies ermöglicht eine verbesserte Klebung von Scheiben in den jeweiligen Scheibenflansch, wobei die Stabilität der Klebung zumindest bereichsweise nicht durch applizierte Lackschichten beeinträchtigt ist.

Nachteilig an der beschriebenen Vorgehensweise ist insbesondere, dass das Abkleben mit einer Maskierfolie zumeist manuell erfolgt, was zum einen eine Ungenauigkeit bei der Platzierung der Maskierfolie als auch einen entsprechend hohen manuellen Aufwand mit sich bringt, auch bezüglich der Vorkonfektionierung der Maskierfolienstücke.

Ausgehend von diesem Stand der Technik ist es Aufgabe der Erfindung, das Verfahren zum mehrfarbigen Lackieren von Werkstücken zu verbessern und auch ein entsprechendes Lackiersystem anzugeben.

Diese Aufgabe wird erfindungsgemäß gelöst durch ein Verfahren zum Lackieren von Werkstücken mit den im Anspruch 1 angegebenen Merkmalen.

Ein geeignetes Flüssigfolienmaterial ist beispielsweise ein wasserbasiertes 1-Komponenten Polyuretanmaterial wie das Produkt "Cellerol" der Firma Mankiewicz.

Der Auftrag der Flüssigfolie erfolgt vorzugsweise in einem Applikationsverfahren, welches durch einen sehr geringen Abstand der Applikationsvorrichtung mit dem mit einer Schutzschicht zu versehenden Werkstück gekennzeichnet ist. Eine Tropfen- oder Sprühnebelbildung des aufgetragenen Flüssigfolienmaterials auf der Oberfläche des Werkstückes wird hierbei vermieden. Auch eine Applikationsvorrichtung in direktem Kontakt mit der Oberfläche des Werkstückes ist möglich.

Eine Sprühextrusion des Flüssigfolienmaterials ist ein Beispiel für ein geeignetes Applikationsverfahren. Hierbei wird in einem Abstand von ca. 10mm bis 70mm zur Oberfläche des Werkstückes eine Applikationsvorrichtung längs der mit einer Schutzschicht zu versehenden Oberfläche geführt, wobei das Flüssigfolienmaterial mittels einer Fördervorrichtung mit einem erhöhten Druck von ca. 5 bis 20 Bar oder auch darüber hinaus durch Öffnungen der Applikationsvorrichtung gedrückt wird.

Somit entfällt der zeitaufwändige Maskierprozess des zu beschichtenden Werkstückes mit einer vorkonfektionierten Folie in vorteilhafter Weise.

Erfindungsgemäß ist zwischen dem Auftragen der Schutzschicht und dem anschließenden Lackieren eine Zeitspanne vorgesehen ist, in welcher die Schutzschicht erhärtet.

Diese Zeitspanne beträgt je nach verwendetem Flüssigfolienmaterial wenige s bis einige Minuten. Ein Erhärten des Flüssigfolienmaterials bedeutet, dass dieses nicht mehr flüssig ist. Nicht nur ein harter, sondern auch ein weicher, beispielsweise auch wachs- oder gummiähnlicher Zustand des Flüssigfolienmaterials ist somit als ein von dem Begriff "erhärtet" beschriebener Zustand anzusehen. In einem erhärteten Zustand des Flüssigfolienmaterials ist eine verlaufsfreie Begrenzung der Schutzschicht gewährleistet und deren Konsistenz erlaubt ein mechanisches Abziehen von dem Werkstück, wie in einer vorteilhaften Ausgestaltung des erfindungsgemäßen Verfahrens vorgesehen.

Erfindungsgemäß wird die Schutzschicht mittels einer Applikationsvorrichtung aufgetragen, welche von einem Industrieroboter bewegt wird.

Der Einsatz eines Industrieroboters, beispielsweise mit 6 oder 7 Freiheitsgraden der Bewegung, ermöglicht einen besonders wiederholgenauen und hochwertigen Auftrag der Schutzschicht.

In einer weiteren Ausgestaltung des erfindungsgemäßen Verfahrens wird wenigstens ein dritter Bereich des Werkstückes in einem vorangehenden Lackiervorgang vor Auftrag der Schutzschicht unter Verwendung eines zweiten Lacks lackiert, wobei der wenigstens eine dritte Bereich durch den wenigstens einen ersten Bereich zumindest teilweise überdeckt wird.

Auf diese Weise ist es möglich, das Werkstück zunächst bereichsweise mit einem Lack einer ersten Farbe zu versehen, zumindest einen Teil dieses lackierten Bereiches mit einer Schutzschicht abzudecken, welche einen anschließenden Lackauftrag mit einer weiteren Farbe auf dem abgedeckten Bereich verhindert. Somit ist in vorteilhafter Weise eine zweifarbige Lackierung ermöglicht, wobei sich die genannte Prozessfolge auch zur Erreichung einer drei oder mehrfarbigen Lackierung wiederholen lässt.

In einer bevorzugtes Verfahrensvariante ist zwischen dem Lackieren des dritten Bereiches und dem Auftragen der Schutzschicht des ersten Bereiches eine Zeitspanne vorgesehen ist, in welcher der zum Lackieren verwendete Lack erhärtet.

Vorzugsweise erfolgt das Erhärten des Lacks in einem dafür vorgesehenen Ofen, beispielsweise in einem Durchlaufofen mit integriertem Fördersystem. Typische Trocknungszeiten in einem Ofen betragen beispielsweise 20min bis 1 h, wobei nach dem Ausfördern des Werkstückes aus einem Ofen noch eine Zeit zum Abkühlen des Werkstückes vorzusehen ist, bevor eine Schutzschicht aufgetragen werden kann.

Ein Erhärten des Lacks bedeutet in diesem Fall eine derartige Erhärtung, dass vorteilhafter Weise eine Beschädigung der Lackschicht eines lackierten dritten Bereiches durch den nachfolgenden Auftrag einer Schutzschicht vermieden ist.

In einer weiteren Ausführungsform des Verfahrens sind die Werkstücke Automobilkarosserien oder Anbauteile für Automobilkarosserien. Hier ist eine zwei- oder mehrfarbige Lackierung kundenseitig besonders häufig verlangt. Aufgrund des üblicherweise hohen Automatisierungsgrades bei der Lackierung derartiger Werkstücke lässt sich das erfindungsgemäße Verfahren insbesondere unter Verwendung eines Industrieroboters besonders effektiv einsetzen.

Erfindungsgemäß werden die Werkstücke während eines Lackiervorganges und/oder während des Auftragens der Schutzschicht zumindest teilweise mittels einer automatischen Fördervorrichtung bewegt.

Eine automatische Fördervorrichtung vereinfacht den Lackiervorgang beziehungsweise das Auftragen der Schutzschicht insbesondere bei einer Serienfertigung, weil so die Absolutbewegungen, beispielsweise eines Industrieroboters beim Lackieren beziehungsweise beim Auftragen der Schutzschicht, entsprechend reduzierbar sind. Vorteilhafterweise sind darüber hinaus bei Verwendung von Robotern die Werkstücke zwischen den verschiedenen Roboterstandorten mittels derselben Fördervorrichtung transportierbar.

Erfindungsgemäß strömt das Flüssigfolienmaterial beim Auftragen der Schutzschicht in Form von mehreren nebeneinander liegenden, parallelen Flüssigfolienmaterialsträngen aus einer Applikationsvorrichtung. Die Flüssigkeitsstränge verlaufen nach Auftreffen auf den ersten Bereich des Werkstückes miteinander zur Schutzschicht.

Durch das Ausströmen in mehreren parallelen Flüssigfolienmaterialsträngen wird eine bahnähnliche Form der Schutzschicht realisiert, wobei mehrere Bahnen in einfacher Weise parallel zueinander aufgebracht werden können. Großflächige Schutzschichtbereiche sind somit einfach auftragbar. Eine typische Anzahl an parallel zueinander verlaufenden Flüssigfolienmaterialsträngen beträgt beispielsweise 5 bis 50, wobei die Länge der Flüssigkeitsstränge, also der Abstand der Applikationsvorrichtung zur Oberfläche des Werkstückes, beispielsweise 10mm bis 70mm beträgt. Ein typischer Abstand zwischen benachbarten Flüssigfolienmaterialsträngen beträgt beispielsweise 1mm bis 10mm.

Ein Zusammentreffen der parallelen Flüssigfolienmaterialstränge schon vor dem Auftreffen auf der Oberfläche würde eine Aufweitung des Flüssigfolienmaterialstrangs mit steigendem Abstand von der Applikationsvorrichtung bedeuten, was die Scharfkantigkeit der aufgetragenen Schutzschicht reduziert. Deshalb ist erfindungsgemäß zur Erhöhung der Scharfkantigkeit der aufgetragenen Schutzschicht vorgesehen, dass die Flüssigfolienmaterialstränge mit annähernd konstantem Querschnitt separat auf der Oberfläche des Werkstückes auftreffen und erst anschließend zur Schutzschicht verlaufen.

Entsprechend einer weiteren Ausführungsform des erfindungsgemäßen Verfahrens wird die Anzahl der Flüssigfolienmaterialstränge während des Auftragens der Schutzschicht variiert.

Die Möglichkeiten der Formgebung von mit einer Schutzschicht zu versehenden Bereichen ist dadurch steigerbar. So ist beispielsweise die Form eines Keils applizierbar, indem bei gleichmäßiger linearer Bewegung der Applikationsvorrichtung sukzessive die jeweils außen strömenden Flüssigkeitsstränge abgeschaltet werden.

In einer besonders bevorzugten Variante des erfindungsgemäßen Verfahrens wird die Bewegungen des Industrieroboters sowie die Steuerung zumindest eines Teils der zum Auftrag der Schutzschicht benötigten Applikationskomponenten von einem gemeinsamen Controller vorgegeben.

Unter Applikationskomponenten sind beispielsweise wenigstens eine Fördervorrichtung für das Flüssigfolienmaterial oder auch Schaltvorrichtungen für das Flüssigfolienmaterial zu verstehen. Die Anzahl der benötigten Steuervorrichtungen, und als solche ist ein Controller zu verstehen, lässt sich dadurch vorteilhaft reduzieren. Zudem ist eine Synchronisierung der Bewegung des Industrieroboters und beispielsweise der Schaltzeitpunkte einer von diesem getragenen Applikationsvorrichtung besonders einfach zu realisieren.

Erfindungsgemäß erfolgt auch der anschließende Lackiervorgang mittels eines Industrieroboters.

Die Erfindungsgemäβe Aufgabe wird auch durch eine Lackiersystem gemäß dem Anspruch 9 gelöst.

Das genannte System ist in vorteilhafter Weise zur Umsetzung von zuvor genannten Verfahrensausgestaltungen geeignet.

Gemäß einer Ausgestaltung des Lackiersystems sind nebeneinander liegenden Austrittsöffnungen der Applikationsvorrichtungen wenigstens in zwei voneinander unabhängigen Gruppen wahlweise von Flüssigfolienmaterial durchströmbar. Hierdurch wird eine höhere Geometriefreiheit der aufgetragenen Schutzschicht ermöglicht.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein Beispiel für einen erfindungsgemäßen Verfahrensablauf und
- Fig. 2: ein Beispiel für ein erfindungsgemäßes Lackiersystem

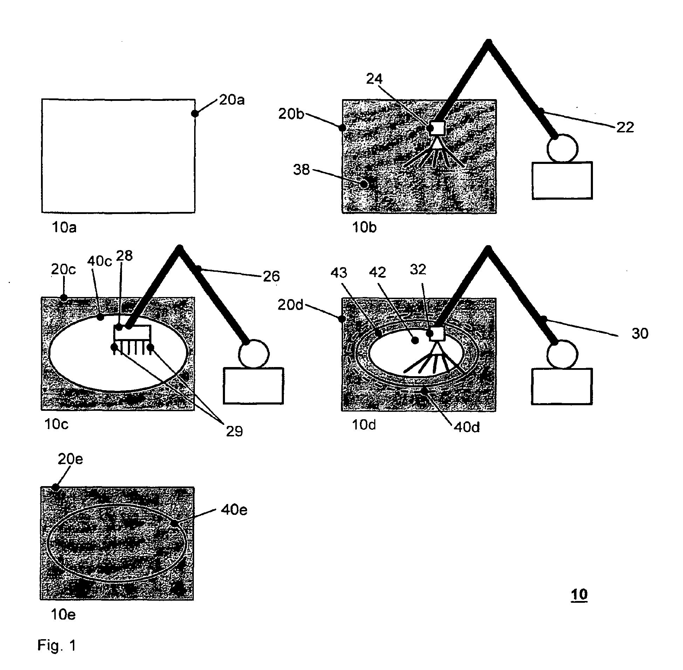

Fig. 1 zeigt ein Beispiel für einen erfindungsgemäßen Verfahrensablauf zum zweifarbigen Lackieren eines ersten Werkstückes in verschiedenen Fertigungszuständen (20a-e). In dem ersten Verfahrensschritt 10a wird das Werkstück 20a, in diesem Fall als eine ebene, unbeschichtete Platte angedeutet, bereitgestellt, beispielsweise durch Einförderung in einen Produktionsbereich mittels einer Fördervorrichtung.

Im nachfolgenden Verfahrensschritt 10b lackiert ein erster Industrieroboter 22 mit einer ersten Lackiervorrichtung 24 das nunmehr in seinen Arbeitsbereich geförderte komplette Werkstück 20a mit einem Lack, beispielsweise der Farbe Silber. Die Verwendung eines Industrieroboters 22, in diesem Fall ein Lackierroboter mit beispielsweise 6 Freiheitsgraden der Bewegung, ermöglicht eine hohe Flexibilität bei der Lackierung auch komplexer Geometrien wie einem Stossfänger oder einer Automobilkarosserie in Serienfertigung. Bei derartigen Geometrien ist in aller Regel der dritte Bereich 38 nicht deckungsgleich mit der gesamten Oberfläche des Werkstückes 20a, sondern kleiner. Der dritte Bereich 38, welcher durch die Lackschicht abgedeckt ist, entspricht in dem gezeigten Beispiel der gesamten Oberfläche des Werkstückes 20a. Nach Abschluss des zweiten Verfahrensschrittes 10b ist das Werkstück in seinem zweiten Fertigungszustand 20b, nämlich als eine komplett mit der Farbe Silber beschichtete Platte.

Anschließend wird in einem nicht gezeigten Verfahrensschritt der Lack getrocknet, beispielsweise in einem dafür vorgesehenen Ofen, so dass sich eine feste Oberfläche der Lackschicht ausbildet. Ein derartiger Trocknungsvorgang dauert beispielsweise 20min bis 1 h bei einer Temperatur von ca. 80°C bis 140°C, je nach Lack und Material des Werkstückes. Vorzugsweise werden die üblicherweise auf einem jeweiligen Warenträger befindlichen Werkstücke durch ein geeignetes Fördersystem, beispielsweise einem Bodenförderer, kontinuierlich durch einen tunnelähnlichen Ofen bewegt.

Nach Abkühlung des Werkstückes wird das mit der Farbe Silber beschichtete Werkstück 20b nunmehr in den Arbeitsbereich eines zweiten Industrieroboters 26 gefördert. Dieser ist mit einer ersten Applikationsvorrichtung 28 zum Auftragen einer Schutzschicht aus Flüssigfolienmaterial, beispielsweise einem wasserbasierten 1-Komponenten Polyuretanmaterial, versehen. Die Applikationsvorrichtung 28 weist vorzugsweise mehrere Austrittsdüsen für das Flüssigfolienmaterial auf, welche beispielsweise auf einer Breite von 15cm entlang wenigstens einer Linie angeordnet sind. Aus jeder Düse strömen Flüssigfolienmaterialstränge 29, welche parallel ausgerichtet sind und nach Auftreffen auf der Oberfläche des Werkstückes 20b zur Schutzschicht verlaufen. Darüber hinaus gehören zu dem Applikationssystem für das Flüssigfolienmaterial auch noch wenigstens eine Pumpe und Ventile zum Fördern beziehungsweise Schalten des Flüssigfolienmaterials. Der Controller des zweiten Industrieroboters 26 steuert in diesem Fall auch das Applikationssystem.

Im dritten Arbeitschritt 10c wird mittels des zweiten Industrieroboters 26 ein erster Bereich 40c des Werkstückes 20b mit einer Schutzschicht aus besagtem Flüssigfolienmaterial versehen. Die zuvor genannten Vorteile beim Einsatz eines Roboters zum Lackieren gelten in gleicher Weise auch für den Auftrag einer Schutzschicht. Nach Auftrag der Schutzschicht 40c ist das Werkstück nunmehr in seinem dritten Fertigungszustand 20c.

Nach dem Trocknen beziehungsweise Erhärten der Schutzschicht 40c und Förderung des Werkstückes 20c in den Arbeitsbereich eines dritten Industrieroboters 30 mit einer zweiten Lackiervorrichtung 32 erfolgt nunmehr im Arbeitsschritt 10d ein Beschichten des Werkstückes 20c in einem zweiten Bereich, beispielsweise mit einem Lack der Farbe schwarz. Dieser zweite Bereich umfasst im gezeigten Beispiel den gesamten nicht durch die Schutzschicht 40c abgedeckten Bereich sowie einen angrenzenden Übergangsbereich 43 auf der Schutzschicht. Aufgrund des unscharfen Sprühverhaltens der zweiten Applikationsvorrichtung 32 ist der zweite Bereich so zu wählen, dass der nicht durch die Schutzschicht abgedeckte Oberflächenbereich des Werkstückes komplett und deckend dem schwarzen Lack bedeckt ist. Eine auf der nunmehr teilweise verdeckten Schutzschicht 40d befindliche Kernzone 42 wird aus Gründen der Lackersparnis nicht lackiert. Das Werkstück ist nunmehr in seinem vierten Fertigungszustand 10d.

In einem nicht gezeigten weiteren Verfahrensschritt wird die teilweise verdeckte Schutzschicht 40d abgezogen. Dies kann sowohl maschinell, beispielsweise mit Hilfe eines Industrieroboters mit einem geeigneten Werkzeug, oder auch manuell erfolgen. Vorzugsweise ist der schwarze Lack zuvor zumindest angetrocknet, so dass sich eine scharfe und nicht verlaufende Kante entlang des Randes der abgezogenen Schutzschicht 40d ausbildet.

Im fünften Fertigungszustand 10e ist das Werkstück nunmehr im ersten Bereich 40e mit der Farbe Silber lackiert und auf der restlichen Oberfläche mit der Farbe schwarz, wobei eine scharfkantige Begrenzung zwischen den beiden Bereichen gegeben ist. Gegebenenfalls ist das Werkstück noch einem anschließenden Trocknungsvorgang in einem Ofen zuzuführen.

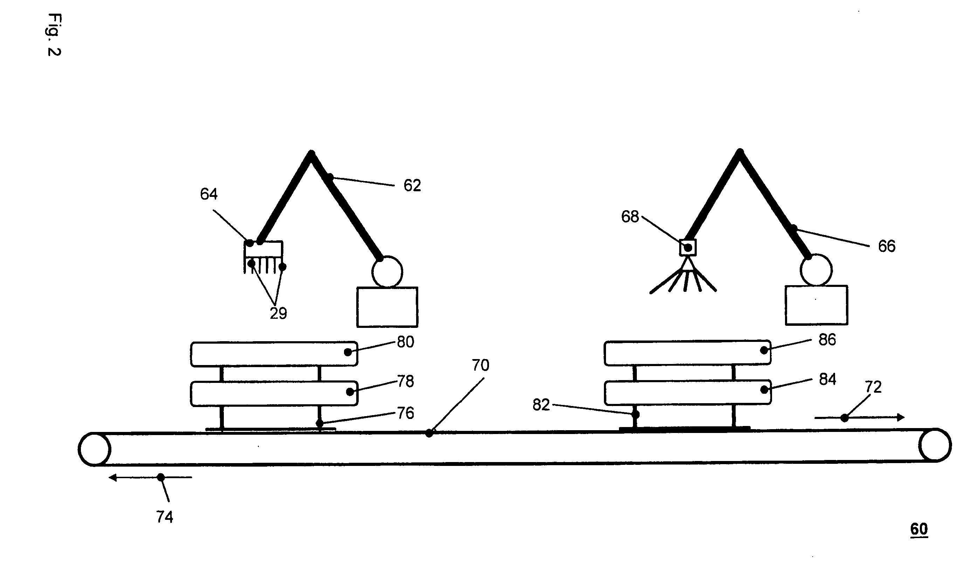

Fig. 2 zeigt ein Beispiel für erfindungsgemäßes Lackiersystem 60. Auf einer automatischen Fördevorrichtung 70 befinden sich eine erste Haltevorrichtung 76 und eine zweite Haltevorrichtung 82, beispielsweise Warenträger oder sogenannte Skids. Auf der ersten Haltevorrichtung 76 sind ein zweites 78 und ein drittes 80 Werkstück befestigt, beispielsweise jeweils Stossfänger für Automobilkarosserien, welche sich im Arbeitsbereich eines vierten Industrieroboters 62 befinden. Dieser ist mit einer zweiten Applikationsvorrichtung 64 zum Auftrag einer Schutzschicht aus Flüssigfolienmaterial versehen. Deren Applikationsverhalten ist mit parallelen Flüssigfolienmaterialsträngen 29 angedeutet.

Die Förderrichtung des automatischen Fördersystems 70 ist mit dem Pfeil 72 angedeutet. Ebenfalls auf dem Fördersystem 70, aber an einer späteren Arbeitsposition, ist die zweite Haltevorrichtung 82 mit dem vierten 84 und fünften 86 Werkstück, beispielsweise jeweils ebenfalls einem Stossfänger. Diese befinden Sich im Arbeitsbereich eines fünften Industrieroboters 66 mit einer dritten Lackiervorrichtung 68, deren Sprühverhalten kegelförmig angedeutet ist.

Das automatische Fördersystem 70 ist sowohl als durchlaufende Fördervorrichtung denkbar, als auch als System von hintereinander angeordneten einzelnen Fördervorrichtungen, welche die jeweiligen Haltevorrichtungen 76, 82 jeweils übergeben. Die benötigte Zeit zum Erhärten der Schutzschicht zwischen nach deren Auftrag durch den vierten Industrieroboter 62 und vor dem anschließenden Lackiervorgang durch den fünften Industrieroboter 66 ist beispielsweise durch einen entsprechende Förderstrecke zwischen den beiden Robotern 62, 66 realisierbar, wobei sich die Zeitspanne aus der Fördergeschwindigkeit und der Länge der Förderstrecke ergibt.

### Bezugszeichenliste

- 10: Beispiel für erfindungsgemäßen Verfahrensablauf
- 10a: Unbeschichtetes erstes Werkstück
- 10b: Vorangehender Lackiervorgang des dritten Bereiches
- 10c: Versehen des ersten Bereiches mit einer Schutzschicht
- 10d: Anschließender Lackiervorgang des zweiten Bereiches
- 10e: Werkstück nach Entfernen der Schutzschicht
- 20a: Erstes Werkstück im ersten Fertigungszustand .
- 20b: Erstes Werkstück im zweiten Fertigungszustand
- 20c: Erstes Werkstück im dritten Fertigungszustand
- 20d: Erstes Werkstück im vierten Fertigungszustand
- 20e: Erstes Werkstück im fünften Fertigungszustand
- 22: Erster Industrieroboter
- 24: Erste Lackiervorrichtung
- 26: Zweiter Industrieroboter
- 28: Erste Applikationsvorrichtung für Schutzschicht
- 29: Flüssigfolienmaterialstränge
- 30: Dritter Industrieroboter
- 32: Zweite Lackiervorrichtung
- 38: Dritter Bereich
- 40c: Erster Bereich mit Schutzschicht
- 40d: Erster Bereich teilweise verdeckt von zweitem Bereich
- 40e: Erster Bereich nach Entfernen der Schutzschicht
- 42: Zweiter Bereich Kernzone
- 43: Zweiter Bereich Übergangszone
- 60: Beispiel für erfindungsgemäßes Lackiersystem
- 62: Vierter Industrieroboter
- 64: Zweite Applikationsvorrichtung für Schutzschicht
- 66: Fünfter Industrieroboter
- 68: Dritte Lackiervorrichtung
- 70: Automatische Fördervorrichtung
- 72: Erste Förderrichtung
- 74: Zweite Förderrichtung
- 76: Erste Haltevorrichtung
- 78: Zweites Werkstück
- 80: Drittes Werkstück
- 82: Zweite Haltevorrichtung
- 84: Drittes Werkstück
- 86: Viertes Werkstück

## Patentansprüche

1. Verfahren zum Lackieren von Werkstücken (20a/b/c/d/e, 78, 80, 84, 86), wobei wenigstens ein erster nicht zu lackierender Bereich (40c/d/e) eines Werkstückes (20a/b/c/d/e, 78, 80, 84, 86) mit einer Schutzschicht versehen wird (10c), wobei in einem anschließenden Lackiervorgang unter Verwendung eines ersten Lacks wenigstens ein zweiter Bereich (42, 43) des Werkstückes (20a/b/c/d/e, 78, 80, 84, 86) lackiert wird (10d), welcher zumindest teilweise den wenigstens einen ersten Bereich (40c/d/e) überdeckt, wobei die Schutzschicht mittels einer von einem Industrieroboter (22, 26, 30, 62, 66) bewegten Applikationsvorrichtung (28, 64) als Flüssigfolienmaterial aufgetragen wird, wobei zwischen dem Auftragen der Schutzschicht (10c) und dem anschließenden Lackieren (10d) eine Zeitspanne vorgesehen ist, in welcher die Schutzschicht erhärtet, wobei die Schutzschicht nach dem anschließenden Lackiervorgang (10d) des wenigstens einen zweiten Bereiches (42, 43) entfernt wird, **dadurch gekennzeichnet, dass** das Flüssigfolienmaterial beim Auftragen der Schutzschicht (10c) in mehreren nebeneinander liegenden, parallelen Flüssigfolienmaterialsträngen (29) aus der Applikationsvorrichtung (28, 64) strömt, welche nach Auftreffen auf den ersten Bereich (40c/d/e) des Werkstückes (20a/b/c/d/e, 78, 80, 84, 86) miteinander zur Schutzschicht verlaufen.

2. Verfahren nach Anspruch 1, **dadurch gekennzeichnet, dass** wenigstens ein dritter Bereich des Werkstückes (20a/b/c/d/e, 78, 80, 84, 86) in einem vorangehenden Lackiervorgang vor Auftrag der Schutzschicht unter Verwendung eines zweiten Lacks lackiert wird (10b) und dass der wenigstens eine dritte Bereich durch den wenigstens einen ersten Bereich (40c/d/e) zumindest teilweise überdeckt wird.

3. Verfahren nach Anspruch 2, **dadurch gekennzeichnet, dass** zwischen dem Lackieren des dritten Bereiches (10b) und dem Auftragen der Schutzschicht des ersten Bereiches (10c) eine Zeitspanne vorgesehen ist, in welcher der zum Lackieren verwendete Lack erhärtet.

4. Verfahren nach einem der vorherigen Ansprüche, **dadurch gekennzeichnet, dass** die Werkstücke (20a/b/c/d/e, 78, 80, 84, 86) Automobilkarosserien oder Anbauteile für Automobilkarosserien sind.

5. Verfahren nach einem der vorherigen Ansprüche, **dadurch gekennzeichnet, dass** die Werkstücke (20a/b/c/d/e, 78, 80, 84, 86) während eines Lackiervorganges (10b, 10d) und/oder während des Auftragens der Schutzschicht (10c) zumindest teilweise mittels einer automatischen Fördervorrichtung (70) bewegt werden.

6. Verfahren nach einem der vorherigen Ansprüche, **dadurch gekennzeichnet, dass** die Anzahl der Flüssigfolienmaterialstränge (29) während des Auftragens der Schutzschicht (10c) variiert wird.

7. Verfahren nach einem der vorherigen Ansprüche, **dadurch gekennzeichnet, dass** die Bewegungen des Industrieroboters sowie die Steuerung zumindest eines Teils der zum Auftrag der Schutzschicht benötigten Applikationskomponenten von einem gemeinsamen Controller vorgegeben sind.

8. Verfahren nach einem der einem der vorherigen Ansprüche, **dadurch gekennzeichnet, dass** der anschließende (10d) und/oder der vorangehende (10b) Lackiervorgang jeweils mittels einer Lackiervorrichtung (24, 32, 68) durchgeführt wird, welche von einem jeweiligen weiteren Industrieroboter (22, 30, 66) bewegt wird.

9. Lackiersystem (60) mit
• wenigstens einem ersten Industrieroboter (26, 62) mit einer Applikationsvorrichtung (28, 64) zum bereichsweisen Versehen wenigstens eines in seinem Arbeitsbereich befindlichen Werkstückes (20a/b/c/d/e, 78, 80, 84, 86) mit einer Schutzschicht aus einem erhärtenden Flüssigfolienmaterial, wobei die Applikationsvorrichtung (28, 64) mehrere nebeneinander liegende und parallel ausgerichtete Austrittsöffnungen zum Durchströmen mit Flüssigfolienmaterial aufweist, *wobei die Austrittsöffnungen derart ausgeprägt sind, dass beim Durchströmen mit Flüssigfolienmaterial jeweilige parallele Flüssigfolienmateriaistränge gebildet sind,*
• wenigstens einer automatischen Fördervorrichtung (70) zum Transport des wenigstens einen Werkstückes (20a/b/c/d/e, 78, 80, 84, 86) aus dem Arbeitsbereich des ersten Industrieroboters (26, 62) in den Arbeitsbereich wenigstens eines zweiten Industrieroboters (30, 66)
• wenigstens einem zweiten Industrieroboter (30, 66) mit einer Lackiervorrichtung (32, 68) zum bereichsweisen Lackieren wenigstens eines in seinem Arbeitsbereich befindlichen Werkstückes (20a/b/c/d/e, 78, 80, 84, 86) mit wenigstens einem Lackmaterial.

10. Lackiersystem nach Anspruch 9, **dadurch gekennzeichnet, dass** die nebeneinander liegenden Austrittsöffnungen der Applikationsvorrichtungen wenigstens in zwei voneinander unabhängigen Gruppen wahlweise von Flüssigfolienmaterial durchströmbar sind.

## Claims

1. Method for painting workpieces (20a/b/c/d/e, 78, 80, 84, 86), at least one first region (40c/d/e) which is not to be painted of a workpiece (20a/b/c/d/e, 78, 80, 84, 86) being provided with a protective layer (10c), at least one second region (42, 43) of the workpiece (20a/b/c/d/e, 78, 80, 84, 86) being painted (10d) in a subsequent painting operation with the use of a first paint, which second region (42, 43) overlaps the at least one first region (40c/d/e) at least partially, the protective layer being applied as liquid film material by means of an application apparatus (28, 64) which is moved by an industrial robot (22, 26, 30, 62, 66), a time period being provided between the application of the protective layer (10c) and the subsequent painting (10d), in which time period the protective layer hardens, the protective layer being removed after the subsequent painting operation (10d) of the at least one second region (42, 43), **characterized in that**, during the application of the protective layer (10c), the liquid film material flows out of the application apparatus (28, 64) in a plurality of parallel liquid film material strands (29) which lie next to one another and, after impacting on the first region (40c/d/e) of the workpiece (20a/b/c/d/e, 78, 80, 84, 86), run together to form the protective layer.

2. Method according to Claim 1, **characterized in that** at least one third region of the workpiece (20a/b/c/d/e, 78, 80, 84, 86) is painted (10b) with the use of a second paint in a preceding painting operation before application of the protective layer, and **in that** the at least one third region is overlapped at least partially by the at least one first region (40c/d/e).

3. Method according to Claim 2, **characterized in that** a time period is provided between the painting of the third region (10b) and the application of the protective layer of the first region (10c), in which time period the paint which is used for painting hardens.

4. Method according to one of the preceding claims, **characterized in that** the workpieces (20a/b/c/d/e, 78, 80, 84, 86) are car bodies or attachment components for car bodies.

5. Method according to one of the preceding claims, **characterized in that** the workpieces (20a/b/c/d/e, 78, 80, 84, 86) are moved at least partially by means of an automatic conveying apparatus (70) during a painting operation (10b, 10d) and/or during the application of the protective layer (10c).

6. Method according to one of the preceding claims, **characterized in that** the number of liquid film material strands (29) is varied during the application of the protective layer (10c).

7. Method according to one of the preceding claims, **characterized in that** the movements of the industrial robot and the control of at least one part of the application components which are required for the application of the protective layer are stipulated by a common controller.

8. Method according to one of the preceding claims, **characterized in that** the subsequent (10d) and/or the preceding (10b) painting operation are/is carried out in each case by means of a painting apparatus (24, 32, 68) which is moved by a respective further industrial robot (22, 30, 66).

9. Painting system (60) having
• at least one first industrial robot (26, 62) with an application apparatus (28, 64) for providing regions of at least one workpiece (20a/b/c/d/e, 78, 80, 84, 86) which is situated in its working region with a protective layer comprising a hardening liquid film material, the application apparatus (28, 64) having a plurality of outlet openings which lie next to one another and are oriented in parallel for liquid film material to flow through, the outlet openings being formed in such a way that, when liquid film material flows through, respective parallel liquid film material strands are formed,
• at least one automatic conveying apparatus (70) for transporting the at least one workpiece (20a/b/c/d/e, 78, 80, 84, 86) out of the working region of the first industrial robot (26, 62) into the working region of at least one second industrial robot (30, 66),
• at least one second industrial robot (30, 66) with a painting apparatus (32, 68) for painting regions of at least one workpiece (20a/b/c/d/e, 78, 80, 84, 86) which is situated in its working region with at least one painting material.

10. Painting system according to Claim 9, **characterized in that** the outlet openings, which lie next to one another, of the application apparatuses can optionally have liquid film material flowing through them at least in two groups which are independent of one another.

## Revendications

1. Procédé de peinture de pièces (20a/b/c/d/e, 78, 80, 84, 86) dans lequel au moins une première partie (40c/d/e) d'une pièce (20a/b/c/d/e, 78, 80, 84, 86) à peindre est dotée d'une couche de protection (10c), au moins une deuxième partie (42, 43) de la pièce (20a/b/c/d/e, 78, 80, 84, 86) qui recouvre au moins en partie la ou les premières parties (40c/d/e) est recouverte (10d) dans une opération suivante de peinture qui utilise une première peinture,
la couche de protection étant appliquée sous la forme d'un matériau en film liquide au moyen d'un dispositif d'application (28, 64) déplacé par un robot industriel (22, 26, 30, 62, 66),
un intervalle de temps au cours duquel la couche de protection durcit étant prévu entre l'application de la couche de protection (10c) et la peinture suivante (10d),
la couche de protection étant enlevée après l'opération suivante (10d) de peinture de la ou des deuxièmes parties (42, 43),
**caractérisé en ce que**
le matériau en film liquide s'écoule hors du dispositif d'application (28, 64) en plusieurs brins parallèles (29) de matériau de film liquide disposés les uns à coté des autres lors de l'application de la couche de protection (10c) et se réunissent les uns aux autres pour former la couche de protection après être entrés en contact avec la première partie (40c/d/e) de la pièce (20a/b/c/d/e, 78, 80, 84, 86).

2. Procédé selon la revendication 1, **caractérisé en ce qu'**au moins une troisième partie de la pièce (20a/b/c/d/e, 78, 80, 84, 86) est peinte dans une application précédente de peinture, qui précède l'application de la couche de protection et qui utilise une deuxième peinture (10b) et **en ce que** la ou les troisièmes parties sont recouvertes au moins partiellement par la ou les premières parties (40c/d/e).

3. Procédé selon la revendication 2, **caractérisé en ce qu'**entre la peinture de la troisième partie (10b) et l'application de la couche de protection de la première partie (10c) est prévu un intervalle de temps au cours duquel la peinture utilisée durcit.

4. Procédé selon l'une des revendications précédentes, **caractérisé en ce que** les pièces (20a/b/c/d/e, 78, 80, 84, 86) sont des carrosseries d'automobiles ou des parties de carrosseries d'automobiles.

5. Procédé selon l'une des revendications précédentes, **caractérisé en ce que** les pièces (20a/b/c/d/e, 78, 80, 84, 86) sont déplacées au moins en partie au moyen d'un dispositif automatique de transport (70) pendant une opération de peinture (10b, 10d) et/ou pendant l'application de la couche de protection (10c).

6. Procédé selon l'une des revendications précédentes, **caractérisé en ce que** le nombre des brins (29) de matière en film liquide varie pendant l'application de la couche de protection (10c).

7. Procédé selon l'une des revendications précédentes, **caractérisé en ce que** les déplacements du robot industriel ainsi que la commande d'au moins une partie des composants d'application nécessaires pour appliquer la couche de protection sont prédéterminés par un contrôleur commun.

8. Procédé selon l'une des revendications précédentes, **caractérisé en ce que** l'opération de peinture suivante (10d) et/ou l'opération de peinture précédente (10b) sont toutes deux exécutées à l'aide d'un dispositif de peinture (24, 32, 68) déplacé par un autre robot industriel (22, 30, 66) respectif.

9. Système de peinture (60) présentant
- au moins un premier robot industriel (26, 62) doté d'un dispositif d'application (28, 64) qui dote certaines parties d'au moins une pièce (20a/b/c/d/e, 78, 80, 84, 86) situées dans sa zone de travail d'une couche de protection en un matériau en film liquide apte à durcir, le dispositif d'application (28, 64) présentant plusieurs ouvertures de sortie disposées les unes à côté des autres et orientées parallèlement les unes aux autres permettant le passage du matériau de film liquide, les ouvertures de sortie débordant de telle sorte que des brins parallèles de matériau de film liquide sont formés lorsqu'elles sont traversées par le matériau en film liquide,
- au moins un dispositif automatique de transport (70) qui transporte la ou les pièces (20a/b/c/d/e, 78, 80, 84, 86) hors de la zone de travail du premier robot industriel (26, 62) et jusque dans la zone de travail d'au moins un deuxième robot industriel (30, 66),
- au moins un deuxième robot industriel (30, 66) doté d'un dispositif de peinture (32, 68) qui peint certaines parties d'au moins une pièce (20a/b/c/d/e, 78, 80, 84, 86) situées dans sa zone de travail à l'aide d'au moins un matériau de peinture.

10. Système de peinture selon la revendication 9, **caractérisé en ce que** les ouvertures de sortie situées les unes à côté des autres des dispositifs d'application peuvent être traversées sélectivement par le matériau en film liquide en au moins deux groupes mutuellement indépendants.
